# DEMANDE DE BREVET EUROPEEN

(11) **EP 4 607 381 A1**
(43) Date de publication de la demande: **27.08.2025**
(21) Numéro de dépôt: 25158197.1
(22) Date de dépôt: 17.02.2025
(51) Int. Cl.: G06F 21/32, G06F 21/35

(54) **PROCEDE D'AUTHENTIFICATION**

(30) Priorité: 22.02.2024 FR 2401745
(71) Demandeur: STMicroelectronics International N.V., 1228 Plan-les-Ouates, Geneva (CH)
(72) Inventeur: GOUABAU, Frederic, 35830 BETTON (FR)
(74) Mandataire: Cabinet Beaumont

(57) **Abrégé**

La présente description concerne un procédé d'authentification (200) d'un utilisateur (150), auprès d'un lecteur (102), utilisant un système (100) comprenant ledit lecteur (102) et un dispositif électronique (101) comportant un premier moyen d'authentification biométrique (1012) et un deuxième moyen d'authentification (1011) adaptés à authentifier ledit utilisateur (150), comprenant les étapes successives suivantes :
- utiliser ledit premier moyen (1012) pour authentifier ledit utilisateur ;
- si l'authentification est un succès, envoyer un premier identifiant (IdBIO) associé audit premier moyen (1012), audit lecteur (102) pour authentifier ledit utilisateur (150) ;
- si l'authentification n'est pas un succès, utiliser ledit deuxième moyen (1011) pour authentifier ledit utilisateur (150) auprès dudit lecteur (102) en envoyant un deuxième identifiant (IdPIN) associé audit deuxième moyen (1011) audit lecteur (102).

## Description

### Domaine technique

La présente description concerne de façon générale les systèmes de sécurité, comme un système de sécurité d'une structure comme un bâtiment, et se rapporte, plus particulièrement, à un procédé d'authentification d'une personne auprès d'un lecteur.

### Technique antérieure

La sécurité informatique est un enjeu industriel majeur de nos jours. En particulier, les procédés d'authentification permettant à un système de s'assurer de la légitimité d'une demande d'accès faite par une entité, comme un utilisateur ou un autre système informatique, afin d'autoriser son accès à des ressources du système, sont constamment améliorés.

Il serait souhaitable de pouvoir améliorer, au moins en partie, certains des aspects des systèmes de sécurité et des procédés d'authentification existants.

### Résumé de l'invention

Il existe un besoin pour un système de sécurité plus performant.

Il existe un besoin pour un procédé d'authentification plus performant.

Il existe un besoin pour un système de sécurité d'accès à un bâtiment plus performant.

Un mode de réalisation pallie tout ou partie des inconvénients des procédés d'authentification connus.

Un mode de réalisation pallie tout ou partie des inconvénients des systèmes de sécurité connus.

Un mode de réalisation prévoit un système de sécurité utilisant plusieurs moyens d'authentification, dont au moins un moyen d'authentification biométrique.

Un mode de réalisation prévoit un système de sécurité adaptable facilement à des systèmes de sécurité déjà existants.

Un mode de réalisation prévoit un procédé d'authentification adaptable facilement à des procédés d'authentification déjà existants.

Un mode de réalisation prévoit un procédé d'authentification d'un utilisateur, auprès d'un lecteur, utilisant un système comprenant ledit lecteur et un dispositif électronique comportant un premier moyen d'authentification biométrique et un deuxième moyen d'authentification adaptés à authentifier ledit utilisateur, comprenant les étapes successives suivantes :
A utiliser ledit premier moyen pour authentifier ledit utilisateur auprès dudit dispositif électronique ;
B si l'authentification de l'étape A est un succès, envoyer un premier identifiant associé audit premier moyen, audit lecteur pour authentifier ledit utilisateur ;
C si l'authentification de l'étape A n'est pas un succès, utiliser ledit deuxième moyen pour authentifier ledit utilisateur auprès dudit lecteur en envoyant un deuxième identifiant associé audit deuxième moyen audit lecteur.

Un autre mode de réalisation prévoit un système comprenant un lecteur et un dispositif électronique, le dispositif électronique comportant un premier moyen d'authentification biométrique et un deuxième moyen d'authentification adaptés à authentifier ledit utilisateur, le système étant adapté à mettre en oeuvre un procédé d'authentification comprenant les étapes successives suivantes :
A utiliser ledit premier moyen pour authentifier ledit utilisateur auprès dudit dispositif électronique ;
B si l'authentification de l'étape A est un succès, envoyer un premier identifiant associé audit premier moyen, audit lecteur pour authentifier ledit utilisateur ;
C si l'authentification de l'étape A n'est pas un succès, utiliser ledit deuxième moyen pour authentifier ledit utilisateur auprès dudit lecteur en envoyant un deuxième identifiant associé audit deuxième moyen audit lecteur.

Selon un mode de réalisation, le lecteur utilise ledit premier identifiant ou ledit deuxième identifiant pour savoir si l'utilisateur est authentifié ou non, ladite base de données étant adaptée à associer au moins deux identifiants à un même utilisateur.

Selon un mode de réalisation, ledit lecteur transfère ledit premier identifiant ou ledit deuxième identifiant à une base de données pour savoir si l'utilisateur est authentifié ou non.

Selon un mode de réalisation, pendant l'étape C, ledit lecteur transfère ledit deuxième identifiant à ladite base de données qui indique si une opération de vérification d'une donnée secrète est nécessaire.

Selon un mode de réalisation, pendant l'étape C, si ladite opération de vérification d'une donnée secrète est nécessaire, alors ledit utilisateur utilise une interface dudit lecteur pour fournir ladite donnée secrète.

Selon un mode de réalisation, le premier moyen d'authentification biométrique utilise un capteur biométrique.

Selon un mode de réalisation, ledit dispositif électronique et ledit lecteur sont adaptés à communiquer ensemble par une communication sans fil.

Selon un mode de réalisation, ladite communication sans fil est une communication en champ proche.

Selon un mode de réalisation, l'utilisateur ne peut s'identifier sans avoir ledit dispositif.

Selon un mode de réalisation, le procédé comprend, après l'étape B, une étape D de mise en oeuvre d'une session de communication sécurisée dudit dispositif électronique par ledit lecteur.

Selon un mode de réalisation, pendant l'étape D, une application adaptée à mettre en oeuvre une communication sécurisée est sélectionnée.

Selon un mode de réalisation, pendant l'étape D, une session de communication sécurisée est ouverte.

Selon un mode de réalisation, pendant l'étape D, ladite session de communication sécurisée est fermée.

Un autre mode de réalisation prévoit un dispositif électronique adapté à être le dispositif électronique dans le système décrit précédemment.

Selon un mode de réalisation, ce dispositif est une carte.

Un autre mode de réalisation prévoit une base de données adaptée à être la base de données dans le système décrit précédemment, et associant au moins deux identifiants à un même utilisateur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un mode de réalisation d'un système de sécurité ; et
la figure 2 représente un schéma bloc illustrant un mode de mise en oeuvre d'un procédé d'authentification.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

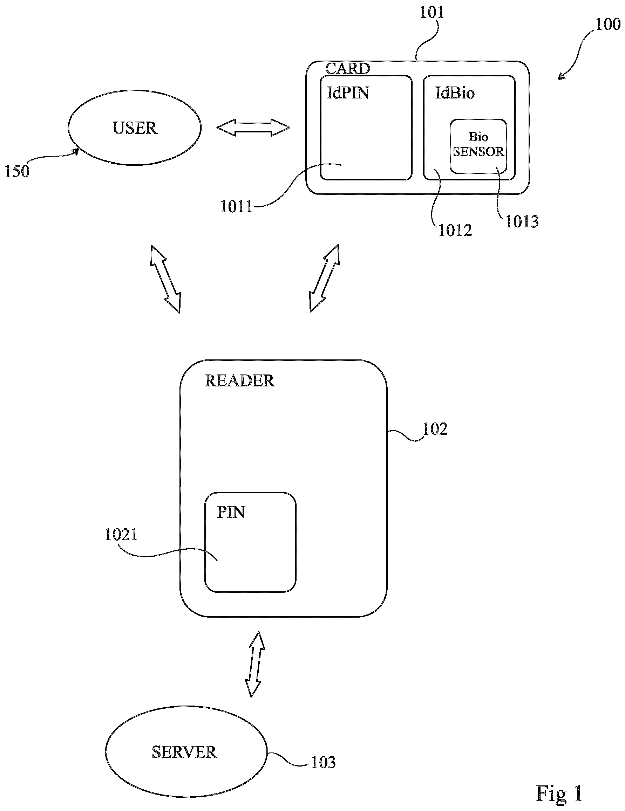

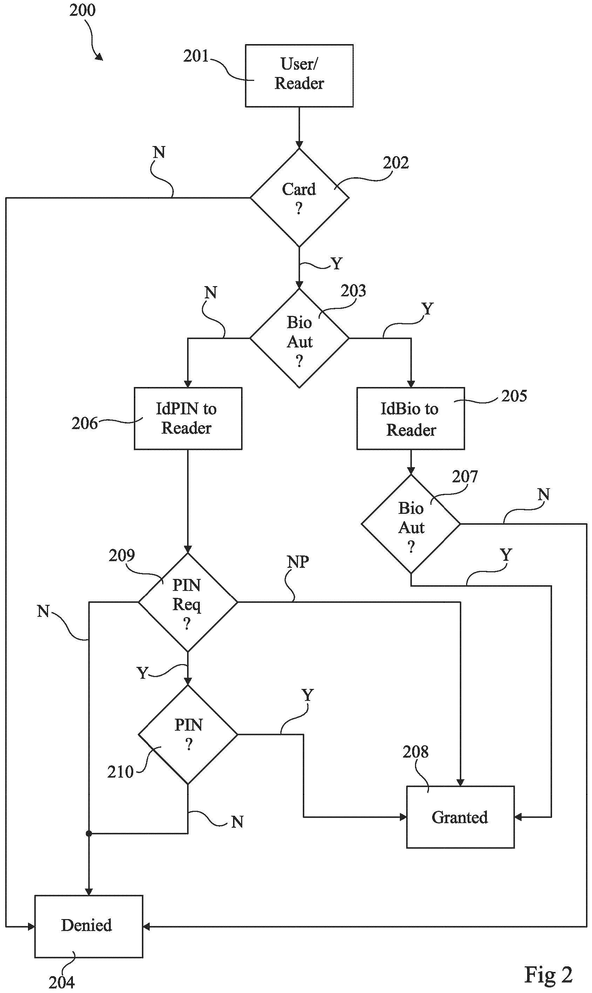

La figure 1 représente, très schématiquement et sous forme de blocs, un mode de réalisation d'un système de sécurité 100 adapté à mettre en oeuvre un procédé d'authentification d'une personne physique 150 voulant accéder à une structure. Un exemple détaillé d'un mode de mise en oeuvre d'un procédé d'authentification est décrit en relation avec la figure 2.

Le système de sécurité 100 est utilisé pour contrôler les accès à une structure à protéger, comme un système informatique ou une infrastructure tel qu'un bâtiment. Plus particulièrement, le système 100 permet de s'assurer de la légitimité d'une demande d'accès faite par une entité 150 (USER), comme une personne physique, appelé ci-après utilisateur 150. Un système de sécurité du type du système 100 peut permettre d'accorder ou de refuser un accès total, ou partiel, à la structure à protéger.

Le système 100 comporte un dispositif électronique 101 (CARD) personnel attribué à chaque utilisateur 150, et un lecteur 102 (READER). Le lecteur 102 est adapté à interroger une base de données 103 (SERVER), ou serveur 103.

Le dispositif électronique 101 en lui-même constitue un premier facteur d'authentification. En effet, sans le dispositif 101 l'utilisateur 150 ne peut pas s'authentifier pour accéder à la structure. Dit autrement, le dispositif électronique est un facteur d'authentification à « avoir sur soi », ou facteur d'authentification « ce que l'on possède », pour pouvoir s'authentifier. Le dispositif électronique personnel 101 est, par exemple, une carte ou un badge. Selon un autre exemple, le dispositif électronique est un objet connecté ou un téléphone intelligent (smartphone). Le dispositif 101 est attribué à une personne physique, selon un exemple, à une personne physique unique. Selon un mode de réalisation préféré, le premier facteur d'authentification utilise une communication sécurisée pour être mis en oeuvre, une telle communication est décrite ci-après.

Selon une variante de réalisation, le dispositif électronique 101 permet de mettre en oeuvre un deuxième facteur d'authentification utilisant une information connue seulement de l'utilisateur 150. Pour cela, le dispositif électronique 101 présente deux moyens d'authentification 1011 (IdPIN) et 1012 (IdBio).

Le moyen d'authentification 1011 permet au détenteur du dispositif 101 de s'authentifier auprès du lecteur 102. Le moyen d'authentification 1011 est associé à un premier identifiant IdPIN. Dans un premier cas, le simple fait de présenter le premier identifiant IdPIN permet au détenteur du dispositif 101 de s'authentifier auprès du lecteur 102. Dans un deuxième cas, lorsque le niveau de sécurité est plus élevé, le moyen d'authentification 1011 permet au détenteur du dispositif 101 de s'authentifier auprès du lecteur 102 au moyen d'une donnée secrète, comme un mot de passe ou un numéro d'identification personnel, aussi appelé code NIP, (PIN, Personal Identification Number). Pour être mis en oeuvre, le moyen d'authentification 1011 utilise, par exemple, le lecteur 102 comme décrit ci-après.

Le moyen d'authentification 1012 permet au détenteur du dispositif 101 de mettre en oeuvre une authentification biométrique pour s'authentifier auprès du dispositif 101 lui-même. Pour cela, le dispositif électronique 101 est équipé d'un capteur biométrique 1013. Selon un mode de réalisation préféré, le capteur biométrique 1013 est un capteur d'empreinte digital. Selon une variante, le capteur biométrique 1013 est tout autre type de capteur biométrique autonome, comme un capteur de reconnaissance rétinienne ou un capteur de reconnaissance de visage. Le moyen d'authentification biométrique 1012 est associé à un deuxième identifiant IdBIO.

Dit autrement, le dispositif électronique 101 comprend deux cartes virtuelles 1011 et 1012 adaptées toutes deux à authentifier le détenteur du dispositif 101 par des moyens d'authentification différents. La carte virtuelle 1011 est associée au premier identifiant IdPIN, et la carte virtuelle 1012 est associée au deuxième identifiant IdBIO.

Le dispositif électronique 101 comprend, en outre, des moyens de communication, non représenté en figure 1, lui permettant d'interagir avec le lecteur 103. Selon un mode de réalisation, ces moyens de communication sont des moyens de communication sans fil, comme par exemple un module adapté à mettre en oeuvre une communication en champ proche (NFC, Near Field Communication). Selon un mode de réalisation préféré, ces moyens de communication sont adaptés à mettre en oeuvre une communication en champ proche selon la norme ISO/IEC 14443.

Le lecteur 102 est un dispositif électronique adapté à coopérer avec le dispositif électronique 101 pour authentifier l'utilisateur 150 du dispositif 101. Selon un exemple, le lecteur 102 est un lecteur portable, une borne d'accès à la structure à protéger, comme une porte sécurisée, etc.

Le lecteur 102 est, par exemple, équipé d'une interface 1021 permettant à un dispositif 101 de mettre en oeuvre son moyen d'authentification 1011 lorsqu'une authentification par ajout d'une donnée secrète est requise. Selon un exemple, l'interface 1021 est un clavier ou un écran tactile.

Le lecteur 102 comprend, en outre, des moyens de communication, non représenté en figure 1, lui permettant d'interagir avec le dispositif 101. Selon un mode de réalisation, ces moyens de communication sont des moyens de communication sans fil, comme par exemple un module adapté à mettre en oeuvre une communication en champ proche (NFC, Near Field Communication). Selon un mode de réalisation préféré, ces moyens de communication sont adaptés à mettre en oeuvre une communication en champ proche selon la norme ISO/IEC 14443. Selon un mode de réalisation préféré, ces moyens de communication permettent au lecteur 102 et au dispositif 101 de mettre en oeuvre une communication sécurisée considérée comme fiable, dans laquelle aucune erreur de communication n'est commise. Le but de la communication sécurisée est que le lecteur 102 authentifie le dispositif 101 par un protocole cryptographique de type vérificateur/ prouveur (Verifier/Prover). De plus la session sécurisée assure que toutes les données reçues par le lecteur 102 proviennent du dispositif 101 qu'il a authentifié.

Le lecteur 102 comprend, en outre, un accès à la base de données 103. Selon un exemple, le lecteur 102 est relié à la base de données par une liaison filaire, sécurisée ou non.

La base de données 103 stocke tous les identifiants des personnes physiques possédant des dispositifs électroniques du type du dispositif électronique 101, ainsi que, pour chaque identifiant une donnée indiquant si l'accès à la structure protégée par le système est autorisé ou non à l'utilisateur. Autrement dit, si les personnes physiques, c'est-à-dire si les utilisateurs, peuvent s'authentifier à l'aide d'au moins deux moyens d'authentification, la base de données 103 stocke au moins deux identifiants associés à un même utilisateur.

De plus, la base de données 103 stocke pour chaque premier identifiant IdPIN une information indiquant si l'utilisation d'une donnée secrète est requise pour mettre en oeuvre l'authentification par le premier moyen d'authentification 1011. Selon un exemple, cette information peut définir des plages horaires auxquelles l'utilisation d'une donnée secrète est requise, ou des parties de la structure pour laquelle l'utilisation d'une donnée secrète est requise.

Le fonctionnement et les avantages du système 100 sont décrits en relation avec la figure 2.

La figure 2 est un organigramme illustrant un mode de mise en oeuvre d'un procédé d'authentification 200 utilisant le système 100 décrit en relation avec la figure 1.

A une étape initiale 201 (User/Reader), un utilisateur du type de l'utilisateur 150 décrit en relation avec la figure 1 souhaite avoir accès à une structure protégée par le système 100 de la figure 1. Pour cela, l'utilisateur 150 est mis en contact avec le lecteur 102 du système 100. Selon un exemple pratique, lorsque l'utilisateur 150 est une personne physique et que la structure à protéger est un bâtiment ou une partie d'un bâtiment, à cette étape, l'utilisateur 150 est, par exemple, face à un lecteur au niveau d'une porte dudit bâtiment.

A une étape 202 (Card ?), suivant l'étape 201, le premier facteur d'authentification du système est mis en oeuvre. Dit autrement, l'utilisateur 150 doit présenter le dispositif 101 pour pouvoir commencer le procédé d'authentification auprès du lecteur 102. Si l'utilisateur 150 est en possession du dispositif 101 (Sortie Y du bloc 202), l'étape suivante est une étape 203 (Bio Aut ?), sinon (sortie N du bloc 202), l'étape suivante est une étape 204 (Denied).

A l'étape 204, l'utilisateur 150 ne présente pas le premier facteur d'authentification, c'est-à-dire le facteur d'authentification à « avoir sur soi », l'accès à la structure lui est donc impossible.

A l'étape 203, l'utilisateur 150 a mis en oeuvre le premier facteur d'authentification, il doit maintenant mettre en oeuvre le deuxième facteur d'authentification pour poursuivre le procédé d'authentification. Comme dit précédemment, le deuxième facteur d'authentification peut être mis en oeuvre par les deux moyens d'authentification 1011 et 1012, ou cartes virtuelles 1011 et 1012. Selon un mode de réalisation, le moyen d'authentification 1012 est mis en oeuvre en premier.

Pour cela, l'utilisateur met en oeuvre une étape d'authentification auprès du dispositif 101 en utilisant le capteur biométrique 1013. Si cette étape d'authentification est un succès (Sortie Y du bloc 203), l'étape suivante est une étape 205 (IdBio to Reader). Sinon (Sortie N du bloc 203), l'étape suivante est une étape 206 (IdPIN to Reader) où le deuxième moyen d'authentification 1011 est mis en oeuvre.

A l'étape 205, l'authentification de l'utilisateur 150 auprès du dispositif 101 est un succès, le dispositif 101 peut donc initier une communication avec le lecteur 102 pour transmettre l'identifiant IdBIO associé à la carte virtuelle 1012.

Selon un exemple, le dispositif 101 et le lecteur 102 peuvent communiquer l'un avec l'autre de façon sécurisée, par exemple en démarrant une session de communication sécurisée. L'utilisation d'une telle session sécurisée permet au dispositif 101 et au lecteur 102 de s'échanger des données de manière fiable. Si le dispositif 101 ou le lecteur 102 reçoit des données qui ne proviennent pas d'une session sécurisée, l'un ou l'autre peut considérer que ces données ne sont pas fiables et ne pas les utiliser. Pour recourir à une session sécurisée, le dispositif 101 et le lecteur 102 peuvent mettre en oeuvre un protocole sécurisé, par exemple le protocole sécurisé connu sous la dénomination commerciale Calypso. Selon un exemple préféré, un procédé d'authentification mis en oeuvre à l'étape 202 comprend les étapes successives suivantes :
- Sélection, par le dispositif 101 et le lecteur 102, d'une application logicielle adaptée à mettre en oeuvre le protocole sécurisé ;
- Ouverture d'une session de communication sécurisée ;
- Echange, de façon optionnel, d'une ou plusieurs données secrètes ; et
- Fermeture de la session de communication sécurisée.

Une fois que le lecteur 102 a reçu l'identifiant IdBIO, le lecteur 102 envoie les données relatives à la base de données 103 pour qu'une décision soit prise. Il est aussi possible que le lecteur 102 stocke les identifiants IdBIO qui ont déjà été acceptés précédemment.

A une étape 207 (Bio Aut ?), successive à l'étape 205, une vérification dans la base de données 103 est directement effectuée pour rechercher une autorisation d'accès associée à l'identifiant IdBIO. Aucune autre vérification est mise en oeuvre ici, en effet, l'utilisateur 150 a déjà mis en oeuvre un procédé d'identification auprès du dispositif 101 à l'étape 203. Si l'identifiant IdBIO présente une autorisation d'accès dans la base de données 103 (Sortie Y du bloc 207), l'étape suivante est une étape 208 (Granted). Sinon (Sortie N du bloc 207), l'étape suivante est l'étape 204 où l'accès à la structure est refusé à l'utilisateur 150.

A l'étape 208, l'utilisateur 150 est autorisée à avoir accès à la structure.

A l'étape 206, le premier moyen d'authentification 1011 n'a pas fonctionné, le deuxième moyen d'authentification 1012 est donc mis en oeuvre ici. L'identifiant IdPIN est donc transmis au lecteur 102. Selon un mode de réalisation, comme l'identifiant IdBIO à l'étape 205, l'identifiant IdPIN est transmis de façon sécurisée, par exemple en utilisant une session sécurisée.

A une étape 209 (PIN Req ?), une vérification dans la base de données 103 est directement effectuée pour rechercher une autorisation d'accès associée à l'identifiant IdBIO. Cette autorisation d'accès peut être directe, comme l'autorisation associée à l'identifiant IdBIO, ou peut n'être accordée qu'après vérification d'une donnée secrète. Si la base de données 103 indique que l'identifiant IdPIN a une autorisation directe (Sortie NP du bloc 209), l'étape suivante est l'étape 208 d'autorisation d'accès à la structure. Si la base de données 103 indique que la vérification d'une donnée secrète est nécessaire (Sortie Y du bloc 209), alors l'étape suivante est une étape 210 (PIN ?). Pour finir, si la base de données indique que l'identifiant IdPIN n'a pas d'autorisation d'accès (Sortie N du bloc 209), alors l'étape suivante est l'étape 204 de refus d'accès à la structure.

A l'étape 210, successive à l'étape 206, la base de données 103 a indiqué que la vérification d'une donnée secrète est nécessaire pour autoriser l'accès à la structure. L'utilisateur 150 met en oeuvre le deuxième moyen d'authentification 1011 en utilisant, par exemple, le lecteur 102 pour fournir la donnée secrète associée à l'identifiant IdPIN. Selon un exemple, l'utilisateur 150 met en oeuvre l'interface 1021 pour composer un mot de passe ou un code NIP. Selon un exemple, le lecteur 102 utilise la base de données 103 pour vérifier la donnée secrète fournie par l'utilisateur 150.

Si l'utilisateur 150 fournit la bonne donnée secrète (sortie Y de l'étape 210), l'étape suivante est l'étape 208 d'accès à la structure.

Si l'utilisateur 150 ne fournit pas la bonne donnée secrète (sortie N de l'étape 210), l'étape suivante est l'étape 204 de refus d'accès à la structure.

Un avantage de ce mode de réalisation est qu'il permet d'authentifier de façon sécurisée un utilisateur. En effet, un utilisateur dont un des identifiants a été envoyé à la base de données a forcément dû mettre en oeuvre au moins deux facteurs d'authentification, le premier facteur étant de posséder un dispositif du type du dispositif 101, et le deuxième facteur étant une information biométrique ou la connaissance d'une donnée secrète.

Un autre avantage de ce mode de réalisation est qu'il permet d'identifier une même personne avec plusieurs identifiants différents, découlant chacun d'un moyen d'authentification propre. Une base de données comprenant un seul identifiant associé à un utilisateur, n'aurait besoin que d'une mise à jour pour ajouter un deuxième identifiant à un même utilisateur, et un lecteur associé à cette base de données n'aurait pas besoin de mise à jour de son côté. Ainsi, un autre avantage de ce mode de réalisation est qu'il peut utiliser des lecteurs déjà existants.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Procédé d'authentification (200) d'un utilisateur (150), auprès d'un lecteur (102), utilisant un système (100) comprenant ledit lecteur (102) et un dispositif électronique (101) comportant un premier moyen d'authentification biométrique (1012) et un deuxième moyen d'authentification (1011) adaptés à authentifier ledit utilisateur (150), comprenant les étapes successives suivantes :
A (203) utiliser ledit premier moyen (1012) pour authentifier ledit utilisateur (150) auprès dudit dispositif électronique (101) ;
B (207) si l'authentification de l'étape A est un succès, envoyer un premier identifiant (IdBIO) associé audit premier moyen (1012), audit lecteur (102) pour authentifier ledit utilisateur (150) ;
C (206) si l'authentification de l'étape A n'est pas un succès, utiliser ledit deuxième moyen (1011) pour authentifier ledit utilisateur (150) auprès dudit lecteur (102) en envoyant un deuxième identifiant (IdPIN) associé audit deuxième moyen (1011) audit lecteur (102).

2. Système (100) comprenant un lecteur (102) et un dispositif électronique (101), le dispositif électronique (101) comportant un premier moyen d'authentification biométrique (1012) et un deuxième moyen d'authentification (1011) adaptés à authentifier ledit utilisateur (150), le système (100) étant adapté à mettre en oeuvre un procédé d'authentification (200) comprenant les étapes successives suivantes :
A (203) utiliser ledit premier moyen (1012) pour authentifier ledit utilisateur (150) auprès dudit dispositif électronique (101) ;
B (207) si l'authentification de l'étape A est un succès, envoyer un premier identifiant (IdBIO) associé audit premier moyen (1012), audit lecteur (102) pour authentifier ledit utilisateur (150) ;
C (206) si l'authentification de l'étape A n'est pas un succès, utiliser ledit deuxième moyen (1011) pour authentifier ledit utilisateur (150) auprès dudit lecteur (102) en envoyant un deuxième identifiant (IdPIN) associé audit deuxième moyen (1011) audit lecteur (102).

3. Procédé selon la revendication 1, ou système selon la revendication 2, dans lequel le lecteur (102) utilise ledit premier identifiant (IdBIO) ou ledit deuxième identifiant (IdPIN) pour savoir si l'utilisateur (150) est authentifié ou non, ladite base de données (103) étant adaptée à associer au moins deux identifiants à un même utilisateur.

4. Procédé ou système selon la revendication 3, dans lequel ledit lecteur (102) transfère ledit premier identifiant (IdBIO) ou ledit deuxième identifiant (IdPIN) à une base de données pour savoir si l'utilisateur (150) est authentifié ou non.

5. Procédé ou système selon la revendication 3 ou 4, dans lequel, pendant l'étape C (206), ledit lecteur (102) transfère ledit deuxième identifiant (IdPIN) à ladite base de données (103) qui indique si une opération de vérification d'une donnée secrète est nécessaire.

6. Procédé ou système selon la revendication 5, dans lequel, pendant l'étape C (206), si ladite opération de vérification d'une donnée secrète est nécessaire, alors ledit utilisateur utilise une interface (1021) dudit lecteur (102) pour fournir ladite donnée secrète.

7. Procédé selon l'une quelconque des revendications 1, 3 à 6, ou système selon l'une quelconque des revendications 2 à 6, dans lequel le premier moyen d'authentification biométrique (1012) utilise un capteur biométrique.

8. Procédé selon l'une quelconque des revendications 1, 3 à 7, ou système selon l'une quelconque des revendications 2 à 7, dans lequel ledit dispositif électronique (101) et ledit lecteur (102) sont adaptés à communiquer ensemble par une communication sans fil.

9. Procédé ou système selon la revendication 8, dans lequel ladite communication sans fil est une communication en champ proche.

10. Procédé selon l'une quelconque des revendications 1, 3 à 9, ou système selon l'une quelconque des revendications 2 à 9, dans lequel l'utilisateur (150) ne peut s'identifier sans avoir ledit dispositif (101).

11. Procédé selon l'une quelconque des revendications 1, 3 à 10, ou système selon l'une quelconque des revendications 2 à 10, dans lequel le procédé (200) comprend, après l'étape B (203), une étape D (203) de mise en oeuvre d'une session de communication sécurisée dudit dispositif électronique (101) par ledit lecteur (102).

12. Procédé ou système selon la revendication 11, dans lequel, pendant l'étape D (203), une application adaptée à mettre en oeuvre une communication sécurisée est sélectionnée.

13. Procédé ou système selon la revendication 11 ou 12, dans lequel, pendant l'étape D (203), une session de communication sécurisée est ouverte.

14. Procédé ou système selon l'une quelconque des revendications 11 à 13, dans lequel, pendant l'étape D (203), ladite session de communication sécurisée est fermée.

15. Dispositif électronique (101) adapté à être le dispositif électronique dans le système selon l'une quelconque des revendications 2 à 14.

16. Dispositif selon la revendication 15, étant une carte.

17. Base de données (103) adaptée à être la base de données dans le système selon l'une quelconque des revendications 3 à 14 dans leur rattachement à la revendication 3, et associant au moins deux identifiants à un même utilisateur (150) .
